(19) Europäisches Patentamt
European Patent Office
Office européen des brevets

(11) EP 1 978 657 A1

(12) **EUROPEAN PATENT APPLICATION**

(43) Date of publication:
**08.10.2008 Bulletin 2008/41**

(51) Int Cl.:
***H04B 17/00*** *(2006.01)*

(21) Application number: **07007032.1**

(22) Date of filing: **04.04.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Siemens Networks GmbH & Co. KG**
**81541 München (DE)**

(72) Inventors:
- **Kim, Jee Hyun**
**80796 München (DE)**
- **Schulz, Egon**
**80993 München (DE)**
- **Zirwas, Wolfgang**
**81249 München (DE)**

(74) Representative: **Fischer, Michael**
**Siemens AG,**
**Postfach 22 16 34**
**80506 München (DE)**

(54) **Method and network suitable for increasing the SINR of a data transmission channel**

(57) A method for increasing the SINR of a data transmission channel is presented, whereby
- a mobile network element (*ms1*, *ms2*), in applying a first method, performs a first estimate of the channel's SINR by changing a first characteristic of a signal transmitted through the channel,
- the mobile network element, in applying a further method, performs a further estimate of the channel's SINR by changing at least one further signal characteristic of the signal,
- the mobile network element selects which method yields a higher estimate of the channel's SINR,
- the mobile network element transmits a feedback signal to at least one affiliated base network element (*bs1, bs2, bs3, bsk1, bsk2*) indicating the selected method that yields the highest channel SINR,
- applying the selected method, the affiliated base network element changes the corresponding characteristic of a signal it transmits, thereby increasing the channel's SINR.

FIG 3

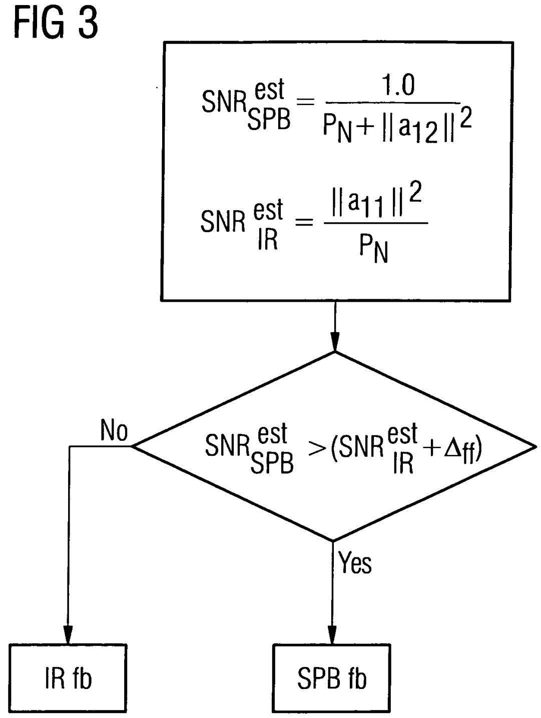


EP 1 978 657 A1

Printed by Jouve, 75001 PARIS (FR)

## Description

A method for increasing, in particular for maintaining a high SINR level of data transmission channel among a plurality of mobile base network elements, is described. In particular, the described methods and the network elements preferably relate to radio transmissions.

SINR refers to Signal to Interference and Noise Ratio.

The dynamic nature of data transmission channels between a plurality of network elements in the sense of channel SINR degradation or changes to channel SINR may result in a network service provider not always being able to provide a desired quality of service. This difficulty is compounded when mobile network elements connect with network elements of a fixed position in that the transmission channels between them are even less subject to stable SINR characteristics. This is because the data transmission vectors may change in location and direction and are thus subject to varying levels of disturbance.

One objective to be achieved lies in providing an overall stable method for maintaining a high a data transmission channel SINR amongst a plurality of network elements.

A method for increasing the SINR of a data transmission channel is presented, whereby a mobile network element, which applies a first method, performs with the first method a first estimate of the channel's SINR by changing a first characteristic of a signal transmitted through the channel.

Additionally, the mobile network element, in applying a further method, performs a further estimate of the channel's SINR by changing at least one further signal characteristic of the signal.

Thereafter, the mobile network element selects which of the methods yields a higher estimate of the channel's SINR.

After carrying out the estimates, the mobile network element transmits a signal to at least one base network element affiliated with it, whereby the signal comprises an indication of the selected method that yields the highest channel SINR.

Affiliation between a mobile network element and a base network element is considered as the state in which the respective network elements communicate with each other based on satisfied criteria relating to signal transmission strength and signal transmission quality between the network elements.

Thereafter, applying the selected method, the affiliated base network element changes the corresponding characteristic of a signal it transmits, thereby increasing the channel's SINR.

Advantageously, the channel's effective SINR may thus be improved for signals transmitted over a period of time until the channel's SINR is substantially changed again due to external disturbance factors. After this period of time, new estimates can be carried out and channel SINR properties correspondingly adapted.

The SINR may be expressed as

$$SINR = \frac{P_S}{P_N + P_I}$$

where $P_s$ is the power of the signal transmitted through the channel, $P_N$ is the power of the noise part within the channel and $P_I$ is the interference power. Thus, the noise component in more general terms of the SINR is expressed as the sum of noise power and interference power. Where the noise component is expressed generally without specific reference to an interference component, the above expression may be considered as a representation of SNR. The described methods can thus also apply to increasing or maintaining a high data transmission channel SNR.

A channel is considered to be a data transmission path between two or more network elements. This may be a fixed line path or a wireless path. The channel may be considered as a band of frequencies such as radio frequencies which may be reserved for specific network services.

The channel may be considered as a link between designated ports of a plurality of network elements. A preferred protocol used for data transmissions between two network elements over a link or channel in a wireless case is UMTS. For a fixed line scenario, preferably Internet Protocol is used, whereby further protocols are usable, for example for purposes of encapsulation of data packets with various headers handled at different levels of network architecture, such as different layers of the OSI model.

A channel's SINR is considered to be the SINR within the channel between a signal transmitted through the channel and a noise component or noise components disturbing the signal. The channel's SINR may vary over time, as the channel will be subject to various external influences such as electromagnetic fields, crosstalk between a plurality of channels or similar signal degrading effects. These may vary over time.

Altering a signal's characteristic in the estimate of the channel's SINR is considered primarily to involve altering a noise component in the channel's SINR and / or altering a property of the signal, such as its amplitude or power as expressed in the channel's SINR. Other alterable signal properties are frequency and phase.

SINR is preferably expressed and handled by electronic measuring equipment on a logarithmic decibel scale. Network elements are provided that comprise such electronic measurement equipment.

Altering the noise component in the channel's SINR is considered as altering a property of the transmitted signal itself, since the noise component may interfere with the signal's amplitude, for example. In the case of digital signals, the noise component may be considered as comprising an error signal caused, for example, by the quantisation of the signal.

A mobile network element is considered to comprise mobile user equipment (UE) such as a mobile telephone or other mobile communications device such as a Laptop computer with network access capability. Thus, the mobile network element is not restricted to usage in a wireless network, but instead may also be employed in a fixed line network or in a network comprising a combination of the two.

A base network element is considered as comprising a receiver / transmitter serving as the hub of a data communications network, and may also be the gateway to a plurality of networks, in particular also between a wired network and a wireless network. It may comprise a low-power transmitter and wireless router. The base network element may be considered as a base station useable in conjunction with a mobile network element.

Preferably, the first method comprises estimating the channel's SINR when the interference power part of the channel's SINR is removed. Removal of the interference part of the channel's SINR can be carried out by substituting the interference part value of the channel's SINR with a zero. This will give a first SINR value which can be compared with other estimates of SINR.

According to one realisation of the method, the further method comprises estimating the channel's SINR when the signal power part of the SINR is increased, whereby the signal power part of the SINR is preferably set to 1.

The signal whose characteristic is changed by the mobile network element for estimating the channel's SINR preferably is a signal transmitted by and received from an affiliated base network element. However, the signal may be transmitted by and received from a non-affiliated network element, whereby, as an example, dummy signals are sent from the non affiliated network element as a means of calibration to allow estimation of the channel's SINR by the mobile station.

The at least one base network element affiliated with the mobile network element determines, according to a preferred realisation of the method, a weight factor based on the selected method to change the characteristic of the signal it transmits.

It is convenient when an effective channel matrix is determined through the product of the weight factor, the weight factor being a weight matrix, with a channel matrix. The channel matrix may contain data elements expressed as complex numbers, as these may alleviate processing work by processing means provided for in the network elements.

The weight matrix comprises complex elements representing amplitude and phase information of precoding elements. The precoding elements are to be applied to a transmitted signal, which may also be in complex number format, in order to pre-distort the signal in an effort to equalize the channel effects at a transmitter side. Since the equalizer process is performed at the transmitter side, a receiver may have a relatively simple structure due to the precoding process. In other words, the channel matrix or channel coefficient matrix represents the distortion caused by channel properties such as path loss, shadowing and fast fading for each individual link, in the format of a complex matrix, to indicate the amplitude and phase of the distortion.

The precoding matrix performs an inverse operation, by using the channel coefficient information to nullify the effects of the channel. The multiplication and addition of complex numbers can be performed by using a suitable DSP (Digital Signal Processor) chip or a FPGA (Field Programmable Gate Array) chip, the choice of which is an implementation issue.

According to a further realisation of the method, a plurality of mobile network elements each transmit a feedback signal to at least one affiliated base network element. The transmission of signals may be spread over time, whereby the consideration of each signal received from a mobile station may be subject to a time frame or time slot.

The signals transmitted by mobile network elements to at least one of their respective affiliated base network elements may contain differing indications of the selected method yielding the highest channel SINR.

According to a preferred realisation of the method, at least one base network element receives a plurality of feedback signals from different mobile network elements with which it is affiliated. It then selects the method from the indicated selected methods of the received feedback signals that yields the highest channel SINR. Thereafter, it changes a characteristic of a signal it transmits based on the selected method.

Preferably, the channel whose SINR is estimated is chosen to be an uplink channel between the at least one mobile network element and the at least one affiliated base network element. The base station which maintains the strongest link with a mobile network element such is chosen to be an affiliated base station for that mobile network element.

Furthermore, a network is presented comprising a plurality of base network elements and affiliated mobile network elements, whereby both base and mobile network elements each comprise signal transmitting and receiving means. Additionally, the network elements comprise

- electronic means for measuring transmission channel SINR,
- electronic means for estimating a channel's SINR by altering a term of the SINR,
- means for comparing different estimated channel SINR values.

The network elements in the network preferably are arranged in a distributed manner. This means that they comprise means for communication and signal calibration amongst each other without a central administrative system, for example a network management system, being needed.
The network elements preferably comprise decision means for deciding upon a method that yields the highest estimate of a channel's SINR coupled with means for transmitting said chosen method to another network element. The comparing and decision means thus may comprise suitable logic circuits comprising switches, the logic circuits comprising suitable mounted program products employed for their control.
The network is suitable for carrying out the described methods wherein the methods are coded into a machine controlling language interpretable by the network elements to generate messages communicatable between the network elements.
The described methods are elaborated upon by means of the following drawings and examples, whereby

Figure 1 shows a wireless network environment in which a plurality of mobile and base stations operate,

Figure 2 shows a flow diagram depicting a method whereby channel SINR may be improved,

Figure 3 shows a decision procedure for a mobile station between two SINR estimation methods,

Figure 4 shows a weight matrix update procedure executable by a base station,

Figure 5 shows a further weight matrix update procedure executable by another base station,

Figure 6 shows a graph depicting SINR values as a function of cumulative density values.

A network is proposed wherein multiple base stations serve multiple mobile stations in a distributed manner, that is, without a central entity for inter-base station coordination. Such a distributed network has the advantage that relatively high scalability of the network can be achieved without necessarily requiring alterations to network elements in the sense of hardware or additional program products for each base or mobile station.
Within such a network, a method for maintaining high channel SINR between said stations is proposed, whereby multiple base stations with multiple antennas and multiple mobile stations with multiple antennas are preferably employed. This enables simpler communication between varying communication partners.
It was found through on going research and analysis of radio communications between mobile and base stations that system performance can be improved by adopting a feedback scheme, preferably using uplink channel data that corrects a precoding weight matrix for a distributed system of network elements in a communications network.
In the case of a zero-forcing method, it was found that a precoding weight matrix could be generated by using a pseudo inverse weight matrix of a downlink channel matrix provided by various downlink CSI (Channel State Information) estimation / transmission schemes, such as a pilot retransmission method, wherein a pilot signal is retransmitted in a communications network. The pilot signal preferably is of a single frequency and is employed for equalisation, reference or for synchronisation purposes.
It was realised that due to some imperfectness of downlink channel information caused by downlink channel estimation errors and / or the distortion of CSI messages on the process of delivering data in the uplink, a resultant precoding weight matrix was not always in line with its supposed direction, to which the signal part is constructed and the interference part is suppressed. Therefore, high interference power or low levels of signal power and thus a poor SINR were observed.
The usage of the pseudo inverse weight matrix has the advantage of relative facility in its implementation and is thus preferably employed.
Further advantageous embodiments of the method were devised as follows.
It was found that channel SINR degradation can be alleviated at least in part by adopting a feedback scheme from a mobile station to a base station, whereby it was considered that the mobile station is usually at the best position to measure the effective channel.
The effective channel is considered to be the channel which is seen from a receiver side, this being the mobile station in this case. The effective channel is considered to be a downlink channel matrix multiplied by a precoding weight

matrix $\mathbf{H}\hat{\mathbf{W}}$.

Use of this information was found to increase overall system performance at a relatively small cost. The proposed method eliminates to a large part interference in transmitted signals between network elements.

According to one implementation of the method, a mobile station measures an effective channel by using a pilot signal or other channel estimation methods and informs its at least one affiliated base station of the interference part discovered. In a cooperative area of multiple base stations, the base stations shall cooperate to serve a plurality of mobile stations. In this context, when considering one certain mobile station, the base station with which the mobile station retains the strongest link is noted by the base station.

Each mobile station may have its own affiliated base station at a certain point in time, whereby different mobile stations may not share the same base station. Each mobile station which belongs to a cooperative area may thus have its own individual affiliated base stations.

It thus proposed to first let a base station, the base station being informed of its affiliated mobile stations, update its precoding matrix such as to remove the interference part of channel SINR in the channel or channels connecting it with the affiliated mobile stations for subsequent data transmissions.

With such an interference removal feedback scheme, henceforth denoted IR, a mobile station sends a signal indicating the interference part of the channel SINR to its affiliated base station(s). The informed base station then calculates a weight factor so that the resulting interference part of the effective channel takes on the value of zero, whereby it may be assumed that possible signal deteriorating characteristics of the downlink channel remain the same as with the uplink channel. This may be true for at least short time intervals.

**Figure 1** depicts a system of 3 base stations *bs1, bs2* and *bs3* and 2 mobile stations *ms1* and *ms2,* each comprising an antenna, whereby the left side of the figure shows three wireless network cells C, each hexagonal in schematic shape. The right side of the figure shows a cooperative area CA or service area hexagonal in schematic shape composed of 3 base stations *bs1, bs2* and *bs3* that each serve 2 mobile stations *ms1* and *ms2* simultaneously. For such a system, the overall system equation can be formulated as follows:

$$\hat{\mathbf{s}} = \mathbf{H}\hat{\mathbf{W}}\mathbf{s} + \mathbf{N}$$

where H is the downlink channel matrix, the elements of which are channel coefficients, which in this case is a 2 x 3 matrix (the number of mobile stations multiplied by the number of base stations). $\hat{\mathbf{W}}$ is the estimated precoding weight 3 x 2 matrix, of which each row is taken from a row of the corresponding base station's weight matrix $\hat{\mathbf{W}}_k$, where $k$ indicates the base station index. **s** is the original signal vector from a transmitter side and $\hat{\mathbf{S}}$ is the received signal vector from a receiver side. **N** is the noise vector. The effective channel matrix is then expressed as follows:

$$\mathbf{H}\hat{\mathbf{W}} = \begin{bmatrix} h_{11} & h_{12} & h_{13} \\ h_{21} & h_{22} & h_{23} \end{bmatrix} \cdot \begin{bmatrix} \hat{w}_{11} & \hat{w}_{12} \\ \hat{w}_{21} & \hat{w}_{22} \\ \hat{w}_{31} & \hat{w}_{32} \end{bmatrix} = \begin{bmatrix} a_{11} & a_{12} \\ a_{21} & a_{22} \end{bmatrix}$$

The effective channel is a 2 x 2 matrix in this case.

Each base station *bs1, bs2, bs3* is aware of its own contribution to $\hat{\mathbf{W}}$. For example, base station *bs1* generates the first row of $\hat{\mathbf{W}}$ by taking the first row of the pseudo inverse of the estimated channel matrix, of which each base station has its own version. Base station *bs1* does not have any access to the other rows of $\hat{\mathbf{W}}$ but other base stations may enter their values in their corresponding rows of $\hat{\mathbf{W}}$.

From the point of view of mobile station *ms1*, $a_{11}$ is the signal part of the effective channel, and $a_{12}$ is the interference part. For mobile station *ms2*, $a_{21}$ is the interference part and $a_{22}$ is the signal part. Mobile stations *ms1* and *ms2* are provided with means to estimate these values.

When a mobile station *ms1* is affiliated with a base station *bs1*, base station *bs1* will be informed of the value of $a_{12}$ by means of an indicative signal or message from mobile station *ms1*. Base station *bs1* finds the value of $\hat{w}_{12}^{\cdot}$ satisfying the following bracketed equations:

$$\begin{cases} h_{11}\hat{w}_{12} + h_{12}\hat{w}_{22} + h_{13}\hat{w}_{32} = a_{12} \\ h_{11}\hat{w}_{12}' + h_{12}\hat{w}_{22} + h_{13}\hat{w}_{32} = 0 \end{cases}$$

$\hat{w}_{12}'$ as determined by base station *bs1* solves the preceding pair of equations according to:

$$\hat{w}_{12}' = \hat{w}_{12} - \frac{a_{12}}{\hat{h}_{11,1}^{DL}}$$

where $\hat{h}_{11,1}^{DL}$ is base station *bs1's* version of the estimated downlink (DL) channel.

A signal power boost feedback scheme, henceforth also denoted SPB, provides for the signal part of the effective channel matrix to be boosted instead of removing the interference part as would be the case with an interference removal feedback scheme.

The signal power boost feedback method preferably operates under the following constraint: base stations affiliated with mobile stations are informed of feedback messages from the mobile stations belonging to the same cooperative area. Feedback messages are broadcasted to as many affiliated base stations as possible.

The signal part is boosted in order to increase the SINR since it was found that a low SINR is not only attributed to relatively high interference, but also to low signal part power. Boosting the signal power part of the effective channel can be achieved by adjusting the weight matrix $\mathbf{H\hat{W}}$ at a transmitter side.

A mobile station measures the signal power part of the effective channel matrix ($a_{11}$ for mobile station *ms1* and $a_{22}$ for mobile station ms2) and feeds this value back to affiliated base stations which in turn boost the signal power part to a desired value, such as 1.0.

This signal power boost feedback scheme can be considered equivalent with the interference removal feedback scheme in the sense that with both schemes the mobile station can measure the effective channel matrix element and this value is fed back to the base station to update the weight matrix. The difference lies in the fact that the signal power boost feedback scheme alters the weight matrix so that the signal part will have a desired value instead of removing the interference as in the interference removal feedback scheme.

The signal power boost feedback scheme improves the SINR performance in case of low SINR.

The signal power boost feedback scheme is preferably implemented when this scheme can be expected to bring about better channel performance. The resulting SINR may be higher when the SPB scheme is applied than the IR scheme.

When merely one or the other feedback scheme is available as a method for updating the weight matrices, the method can be called a straightforward process.

In the case where a plurality of feedback schemes are available to the mobile stations, the latter can determine which feedback scheme leads to better performance (higher SINR). Mobile stations will have the advantage that they are likely to be at the best position for measuring signal interference and noise power.

A feedback method adopting both the interference removal and the signal power boost methods is denoted henceforth as a Joint Optimisation Process and is a preferred implementation of a method for improving channel SINR. The Joint Optimisation Process may, by way of example, be implemented by the following procedures:

1. Each mobile station decides which of the plurality of feedback schemes should be used (yield a higher channel SINR) and sends a corresponding message to as many affiliated base stations as possible in a cooperative area.

2. Base stations affiliated with the mobile station having transmitted the message decide whether they will implement a straightforward process or a Joint Optimisation Process. This will depend on whether they have received conflicting messages from mobile stations selecting their preferred method.

3. The affiliated base stations update corresponding weight matrix elements according to their selection from the different weight matrix update methods.

Thus, each mobile station first measures signal power, interference power and noise power of received signals.

It then determines the SINR obtained based on these parameters. It then estimates an SINR based on the signal power boost feedback scheme followed by an estimation of the SINR based on the interference removal feedback scheme. The corresponding equations for these three different SINR values are given below in respective order, where $P_s$ stands for signal power, $P_N$ stands for signal noise power and $P_I$ stands for signal interference power. *SPB* is the suffix for signal power boost, *IR* is that of interference removal and est is that of an estimate.

$$SINR = \frac{P_S}{P_N + P_I}, \quad SINR_{SPB}^{est} = \frac{1.0}{P_N + P_I}, \quad SINR_{IR}^{est} = \frac{P_S}{P_N}$$

The estimation process for the signal power boost feedback scheme is preferably done by substituting a desired value such as 1.0 for $P_s$ , in the case of the interference removal feedback scheme by substituting 0 for $P_I$, the other elements remaining unchanged. Finally, each mobile station compares the two estimated post-feedback SINR values and decides its feedback scheme as the one which could lead to the higher SINR.

There may be some difference between the estimated post-feedback SINR and the actual post-feedback SINR, since the feedback scheme may change its target element of the effective channel and may also bring about unexpected side effects.

Nevertheless, after receiving messages or indications from the mobile stations of selected or preferred methods for improving channel SINR, the base stations having received these messages perform the weight matrix update process after receiving the feedback messages from the mobile stations. The update is done according to the entries of Table 1 as follows:

| | interference removal feedback scheme | signal power boost feedback scheme |
|---|---|---|
| *ms1* | $\hat{w}_{k_1 2}' = \hat{w}_{k_1 2} - \frac{a_{12}}{\hat{h}_{1k_1,k_1}^{DL}}$ | $\hat{w}_{k_1 1}' = \hat{w}_{k_1 1} + \frac{1.0 - a_{11}}{\hat{h}_{1k_1,k_1}^{DL}}$ |
| *ms2* | $\hat{w}_{k_2 1}' = \hat{w}_{k_2 1} - \frac{a_{21}}{\hat{h}_{2k_2,k_2}^{DL}}$ | $\hat{w}_{k_2 2}' = \hat{w}_{k_2 2} + \frac{1.0 - a_{22}}{\hat{h}_{2k_2,k_2}^{DL}}$ |

Here, $k_i(i=1,2)$ is the index of the affiliated base station of mobile station *i*.

The interference removal scheme formulas preferably are designed to lead to 0 for the interference parts of the effective channel matrix, instead of non-zero $a_{12}$ and $a_{21}$ values remaining in the formulas. This is to be achieved by updating $\hat{W}_{k12}'$ and $\hat{W}_{k21}'$ assuming that other elements in that column of $\hat{\mathbf{W}}$ remain the same, which is clearly stated in the formulas by the second subscript of w. In short, *ms1* updates the weight factor in the second column, while *ms2* does it in the first column.

The signal power boost feedback scheme formulas for mobile stations *ms1* and *ms2* are designed to lead to 1.0 for the signal parts of $\mathbf{H\hat{W}}$, instead of $a_{11}$ and $a_{22}$ being values other than one, such as fractional multiples of 1.

According to a preferred implementation of the method wherein channel SINR is improved, the above manner of updating the weight matrices however is not employed in the case where mobile station *ms1* and mobile station *ms2* have different feedback schemes. When mobile station *ms1* and mobile station *ms2* decide on different feedback schemes, the weight matrix elements to be updated lie in the same column of the weight matrix, which violates the intended formula usage. In this case, the formulas should be derived by jointly considering both of the feedback values for the purpose of achieving boosting the signal part of one user and suppressing the interference part of another user.

For example, the conditions which should be fulfilled in case that both weight factors to be updated lie in the 1st column of the weight matrix (mobile station *ms1* -> signal power boost feedback scheme, mobile stations ms2 -> interference removal feedback scheme), are as follows:

$$\begin{cases} \begin{bmatrix} h_{11} & h_{12} & h_{13} \\ h_{21} & h_{22} & h_{23} \end{bmatrix} \cdot \begin{bmatrix} \hat{w}_{k_1 1} \\ \hat{w}_{k_2 1} \\ \\ \end{bmatrix} = \begin{bmatrix} a_{11} \\ a_{21} \end{bmatrix} \\ \\ \begin{bmatrix} h_{11} & h_{12} & h_{13} \\ h_{21} & h_{22} & h_{23} \end{bmatrix} \cdot \begin{bmatrix} \hat{w}'_{k_1 1} \\ \hat{w}'_{k_2 1} \\ \\ \end{bmatrix} = \begin{bmatrix} 1.0 \\ 0.0 \end{bmatrix} \end{cases}$$

The indices $k_1$ and $k_2$ of denote the affiliated base station indices of mobile station *ms1* and mobile station *ms2,* respectively. Irrelevant factors are left as blank in the weight matrix column. The upper bracketed equation describes the current status whereas the lower bracketed equation describes the preferred status after the weight factor update has been carried out. The w's denoting the weight factors of the current status are not given apostrophes (primes) whereas those denoting the updated weight factors of the preferred channel SINR status are given apostrophes. A solution which is provided by jointly solving the above bracketed equations is shown with following Table 2:

| | mobile station 1 -> SPB & mobile station 2 -> IR | mobile station 1 -> IR & mobile station 2 -> SPB |
|---|---|---|
| *ms1* | $\begin{bmatrix} \hat{w}'_{k_1 1} \\ \\ \end{bmatrix} = \begin{bmatrix} \hat{h}_{1k_1,k_1} & \hat{h}_{1k_2,k_1} \\ \hat{h}_{2k_1,k_1} & \hat{h}_{2k_2,k_1} \end{bmatrix}^{-1} \cdot \begin{bmatrix} 1.0 - a_{11} \\ -a_{21} \end{bmatrix} + \begin{bmatrix} \hat{w}_{k_1 1} \\ \\ \end{bmatrix}$ | $\begin{bmatrix} \hat{w}'_{k_1 2} \\ \\ \end{bmatrix} = \begin{bmatrix} \hat{h}_{1k_1,k_1} & \hat{h}_{1k_2,k_1} \\ \hat{h}_{2k_1,k_1} & \hat{h}_{2k_2,k_1} \end{bmatrix}^{-1} \cdot \begin{bmatrix} -a_{12} \\ 1.0 - a_{22} \end{bmatrix} + \begin{bmatrix} \hat{w}_{k_1 2} \\ \\ \end{bmatrix}$ |
| *ms2* | $\begin{bmatrix} \\ \hat{w}'_{k_2 1} \end{bmatrix} = \begin{bmatrix} \hat{h}_{1k_1,k_2} & \hat{h}_{1k_2,k_2} \\ \hat{h}_{2k_1,k_2} & \hat{h}_{2k_2,k_2} \end{bmatrix}^{-1} \cdot \begin{bmatrix} 1.0 - a_{11} \\ -a_{21} \end{bmatrix} + \begin{bmatrix} \\ \hat{w}_{k_2 1} \end{bmatrix}$ | $\begin{bmatrix} \\ \hat{w}'_{k_2 2} \end{bmatrix} = \begin{bmatrix} \hat{h}_{1k_1,k_2} & \hat{h}_{1k_2,k_2} \\ \hat{h}_{2k_1,j} & \hat{h}_{2k_2,k_2} \end{bmatrix}^{-1} \cdot \begin{bmatrix} -a_{12} \\ 1.0 - a_{22} \end{bmatrix} + \begin{bmatrix} \\ \hat{w}_{k_2 2} \end{bmatrix}$ |

In the case that mobile station *ms1* sends $a_{11}$ with, for example, a signal power boost feedback flag to base station $bsk_1$ and mobile station *ms2* sends $a_{21}$ with an interference removal feedback flag to base station $bsk_2$, base station $bsk_1$ updates the weight matrix element $\hat{w}_{k11}$' using its own version of the channel matrix and so does base station $bsk_2$ for $\hat{w}_{k21}$'.

**Figure 2** shows different steps used in a method for improving data transmission quality in channels between 3 base stations $bsk_1$, $bsk_2$ and *bsk* and 2 mobile stations *ms1* and *ms2.* The presented number of base stations and mobile stations is meant to simplify explanation. More of either station can be used and the equations for updating weight matrices correspondingly adapted.

Base stations $bsk_1$ and $bsk_2$ represent the affiliated base station of mobile stations *ms1* and *ms2,* respectively. Base station *bsk* shown in the figure on the righthand side is not affiliated with any mobile station, but cooperates with other base stations in the cooperative area to transmit data.

At time $t_1$, all three base stations perform precoding and transmit precoded signals to mobile station *ms1* and mobile station *ms2* as shown with the arrows originating at the topmost boxes.

At time $t_2$, the mobile stations *ms1* and *ms2* measure the signals received from the base stations and estimate the signal part and the interference part of the effective channel matrix.

For estimating the signal part of the effective channel matrix, mobile stations *ms1* and *ms2* determine values $a_{11}$ and $a_{22}$, respectively.

For estimating the interference part of the effective channel matrix, mobile stations *ms1* and *ms2* determine values $a_{12}$ and $a_{21}$, respectively.

At time $t_3$, the mobile stations *ms1* and *ms2* decide which of a plurality of feedback schemes shall be used. To show how this is done, **Figure 3** is referred to. This figure shows a schematic diagram of a feedback scheme decision process of one of the mobile stations, mobile station *ms1*. In case of mobile station *ms2*, Figure 3 should be interpreted in such as way that values $a_{11}$ and $a_{12}$ shown in the uppermost block in the figure are replaced by $a_{22}$ and $a_{21}$, respectively.

Mobile station *ms1* (and / or mobile station *ms2* with its own estimated SINR values) decides which feedback scheme is appropriate by comparing the estimated SINR values based on interference removal IR or signal power boost SPB. This is shown in uppermost block with

$$SINR_{SPB}^{est} = \frac{1.0}{P_N + \|a_{12}\|^2}$$

and

$$SINR_{IR}^{est} = \frac{\|a_{11}\|^2}{P_N}$$

It has been shown through simulation results that steepness of SINR curve is affected by an offset value $\Delta_{off}$. This offset value can be determined based on simulation results or other methods.

Thus, where $SINR_{SPB}^{est} > (SINR_{IR}^{est} + \Delta_{off})$ is a true statement, a case which is indicated with a "yes" arrow, a signal power boost feedback scheme *SPB fb* is preferably employed as shown in the box to which said arrow leads (fb stands for feedback).

Where $SINR_{SPB}^{est} > (SINR_{IR}^{est} + \Delta_{off})$ is not true, a case which is indicated with a "no" arrow, an interference removal feedback scheme *IR fb* is preferably employed as shown in the box to which said arrow leads.

Referring again to **Figure 2,** at time $t_4$, mobile station *ms1* generates a feedback message. This may involve involves quantisation of the signal or interference part of the effective channel and differentiating between the interference removal and signal power boost feedback schemes so that base stations receiving the signal can recognise the chosen feedback scheme. Quantisation may involve providing the generated signal with a corresponding flag recognizable by the base stations to which the generated message is sent. After generating the message, the mobile stations transmit the feedback message to its affiliated base stations $bsk_1$.

At time $t_5$, the affiliated base station $bsk_1$ decodes the received feedback messages from mobile station ms1 (and so does base station $bsk_2$ with a corresponding received message from mobile station *ms2).*

At time $t_6$, base station $bsk_i$ (i = 1, 2) performs the weight matrix element $\hat{w}'_{k_i j}$ (j = 1, 2) update process, the procedure of which is explained in more detail with **Figure 4**.

Referring to **Figure 4,** the update process for $\hat{w}'_{k_i j}$ as performed by base station $bsk_1$ is decided by whether the feedback schemes *ms1-fb* and *ms2-fb* from two mobile stations *ms1* and *ms2* return the same channel SINR results or not. This is indicated in the topmost diamond shaped box with *ms1-fb = ms2-fb? .* The switching between these two possibilities is shown by an arrow indicating "yes" and an arrow indicating "no" leading to a boxes StrP and JOP, where straightforward and a Joint Optimisation processes are indicated, respectively.

In the above straightforward process according to Table 1, the mobile stations *ms1* and *ms2* preferably transmit their feedback messages to their affiliated base stations, since each mobile station may not be able to perceive the feedback scheme for another mobile station. The updated weight matrix is then used for subsequent data transmissions until another new weight matrix is provided.

In the case the same channel SINR results are returned, indicated by the arrow "yes" leading to lower box StrP, the updated weight matrix element is calculated by base station $bsk_1$ in a straightforward process according to Table 1. This straightforward process is depicted in more detail by what is contained in box StrP to which the "yes" arrow leads. Here, if mobile station *ms1* had chosen a signal power boost method to increase the channel's estimated SINR (indicated by *ms1:SPB?* leading to "no" in the diamond shaped field), then a weight factor

$$\hat{w}_{k_1 1}' = \hat{w}_{k_1 1} + \frac{1.0 - a_{11}}{\hat{h}^{DL}_{1k_1,k_1}}$$

is calculated, where

$\hat{w}_{k_1 1}$' is shown in a circle at the end of the "yes" arrow in box StrP.

Note that weight factors updated via the straightforward process are expressed with apostrophes at the end of the expression. Weight factors updated via the Joint Optimisation Process are expressed with an apostrophe immediately following $\hat{W}$ .

If mobile station *ms1* had not chosen a signal power boost method to increase the channel's estimated SINR (indicated by *ms1:SPB?* leading to "no" in the diamond shaped field of box StrP), then a weight factor

$$\hat{w}_{k_1 2}' = \hat{w}_{k_1 2} - \frac{a_{12}}{\hat{h}^{DL}_{1k_1,k_1}}$$

according to the interference power removal scheme (IR) is calculated, where

$\hat{w}_{k_1 2}$' is also shown in a circle at the end of the "no" arrow.

In the case the results differ, that is, *ms1-fb = ms2-fb?* is a false statement, then a Joint Optimisation Process is carried out by base station $bsk_1$, whereby weight factors are updated by base station $bsk_1$. This is shown in the box JOP to which the "no" arrow leads. The weight factors are calculated according to the entries of row 1 in previously presented Table 2.

Here, if mobile station *ms1* had chosen a signal power boost method to increase the channel's estimated SINR (indicated by *ms1:SPB?* leading to "yes" in the diamond shaped field of box JOP), then a weight factor

$$\begin{bmatrix} \hat{w}'_{k_1 1} \\ \end{bmatrix} = \begin{bmatrix} \hat{h}_{1k_1,k_1} & \hat{h}_{1k_2,k_1} \\ \hat{h}_{2k_1,k_1} & \hat{h}_{2k_2,k_1} \end{bmatrix}^{-1} \cdot \begin{bmatrix} 1.0 - a_{11} \\ -a_{21} \end{bmatrix} + \begin{bmatrix} \hat{w}_{k_1 1} \\ \end{bmatrix}$$

according to the signal power boost method SPB is calculated, where

$\hat{w}'_{k_1 1}$ is shown in a circle at the end of the "yes" arrow.

If mobile station *ms1* had not chosen a signal power boost method to estimate the channel's SINR (indicated by *ms1:SRB?* leading to "no" in the diamond shaped field of box StrP), then a weight factor

$$\begin{bmatrix} \hat{w}'_{k_1 2} \\ \end{bmatrix} = \begin{bmatrix} \hat{h}_{1k_1,k_1} & \hat{h}_{1k_2,k_1} \\ \hat{h}_{2k_1,k_1} & \hat{h}_{2k_2,k_1} \end{bmatrix}^{-1} \cdot \begin{bmatrix} -a_{12} \\ 1.0 - a_{22} \end{bmatrix} + \begin{bmatrix} \hat{w}_{k_1 2} \\ \end{bmatrix}$$

according to the interference removal scheme (IR) is calculated, where $\hat{w}'_{k_1 2}$ is shown in a circle at the end of the "no" arrow.

Figure 5 shows the process according to Figure 4 for another base station $bsk_2$. The same procedure are described with Figure 4 is carried out, however the weight factors calculated are those of the second rows of Tables 1 and 2 for the straightforward process and for the Joint Optimisation Process, respectively. The second rows each refer to mobile station *ms2*. Correspondingly, the entries in the boxes StrP and JOP of Figure 5 contain the choice of the SINR increasing method (IR or SPB) as made by mobile station *ms2*.

Advantageously, no signal exchange is required among base stations or among mobile stations for the Joint Optimisation method which means that it can be executed in a strictly distributed manner throughout a network.

Figure 6 depicts the simulation results wherein the radius of a wireless network cell $R_{cell}$ is 1 km (See Figure 1 for a depiction of a wireless network cell C).

The curve given the name dSA2sfb, which shows the behaviour of SINR according to the Joint Optimisation Feedback Scheme, shows about 20 dB gain over the case without any feedback at all, whose curve is denoted dSA. The dSA2sfb curve has a 4 dB gain over the straightforward feedback method (curve dSAfb) at 5 % cdf (cumulative density function), whereby the 5% cdf point is considered critical and used as performance criteria here. The low SINR region is greatly shrunk as shown by the down-right shifting of the cdf graph in the figure, which leads to an increase of outage throughput. For example, the figure shows that an SINR less than 0 dB takes 4 % for the case with the straightforward feedback dSAfb and the corresponding percentile is only 2 % for the Joint Optimisation method dSA2sfb, amounting to just merely half of the straightforward feedback case.

Thus, the gain is achieved with simple modification whilst the distributed properties of system requirements are maintained.

List of Abbreviations

| | |
|---|---|
| *ms1* | first mobile station |
| *ms2* | second mobile station |
| *bs1* | first base station |
| *bs2* | second base station |
| *bs3* | third base station |
| *bsk1, bsk1, bsk* | base stations |

| | |
|---|---|
| S | overlapping network sector |
| C | network cell |
| CA | cooperative area |
| $h_{11}$ | channel matrix element between ms1 and bs1 |
| $h_{12}$ | channel matrix element between ms1 and bs2 |
| $h_{21}$ | channel matrix element between ms2 and bs1 |
| $h_{22}$ | channel matrix element between ms2 and bs2 |
| $h_{13}$ | channel matrix element between ms1 and bs3 |
| $h_{23}$ | channel matrix element between ms2 and bs3 |

$t_1$ to $t_6$ time phases

StrP straightforward process

JOP Joint Optimisation Process

## Claims

**1.** Method for increasing the SINR of a data transmission channel, whereby

- a mobile network element (*ms1*, *ms2),* in applying a first method, performs a first estimate of the channel's SINR by changing a first characteristic of a signal transmitted through the channel,
- the mobile network element, in applying a further method, performs a further estimate of the channel's SINR by changing at least one further signal characteristic of the signal,
- the mobile network element selects which method yields a higher estimate of the channel's SINR,
- the mobile network element transmits a feedback signal to at least one affiliated base network element *(bs1, bs2, bs3, bsk1, bsk2*) indicating the selected method that yields the highest channel SINR,
- applying the selected method, the affiliated base network element changes the corresponding characteristic of a signal it transmits, thereby increasing the channel's SINR.

**2.** Method according to claim 1, whereby the first method comprises estimating the channel's SINR when the noise part ($P_I$) of the channel's SINR is removed.

**3.** Method according to one of the claims 1 or 2, whereby the further method comprises estimating the channel's SINR when the the signal power part ($P_s$) of the SINR is increased.

**4.** Method according to claim 3, wherein the signal power part ($P_s$) of the SINR is set to 1.

**5.** Method according to one of the preceding claims, whereby the signal whose characteristic is changed by the mobile network element (*ms1, ms2*) for estimating the channel's SINR is a signal transmitted by and received from an affiliated base network element *(bs1, bs2, bs3, bskl, bsk2).*

**6.** Method according to one of the preceding claims, whereby the at least one base network element (*bs1, bs2, bs3, bsk1, bsk2)* affiliated with the mobile network element (*ms1, ms2)* determines a weight factor based on the selected method to change the characteristic of the signal it transmits.

**7.** Method according to claim 6, whereby an effective channel matrix is determined through the product of the weight factor, the weight factor being a weight matrix, with a channel matrix.

**8.** Method according to claim 7, whereby the channel matrix is provided with at least one of the following data elements:

- status of the channel,
- transmission delay of the channel,
- power of the signal transmitted through the channel,
- frequency of the signal transmitted through the channel,
- amplitude of the signal transmitted through the channel,
- phase of the signal transmitted through the channel.

**9.** Method according to claim 8, wherein at least one of the data elements of the channel matrix is expressed as a complex number.

**10.** Method according to one of the preceding claims, whereby a plurality of mobile network elements (*ms1, ms2)* each transmit a feedback signal to at least one affiliated base network element *(bs1, bs2, bs3, bsk1, bsk2*).

**11.** Method according to claim 10, whereby the feedback signals transmitted by mobile network elements (ms1, ms2) to at least one of their respective affiliated base network elements *(bs1, bs2, bs3, bsk1, bsk2)* contain differing indications of the selected method yielding the highest channel SINR.

**12.** Method according to one of the claims 10 or 11, whereby

- at least one base network element (*bs1, bs2, bs3, bsk1, bsk2*) receives a plurality of feedback signals from different mobile network elements *(ms1, ms2)* with which it is affiliated, and
- selects the method from the indicated selected methods of the received feedback signals that yields the highest channel SINR, and
- changes a characteristic of a signal it transmits based on the selected method.

**13.** Method according to one of the preceding claims, whereby the channel whose SINR is estimated is chosen to be a downlink channel between the at least one mobile network element *(ms1, ms2)* and the at least one affiliated base network element *(bs1, bs2, bs3, bsk1, bsk2*).

**14.** Method according to one of the preceding claims, whereby the channel whose SINR is estimated is chosen to be an uplink channel between the at least one mobile network element (*ms1, ms2)* and the at least one affiliated base network element (*bs1, bs2, bs3, bsk1, bsk2*).

**15.** Method according to one of the preceding claim, whereby a UMTS protocol is employed for communication between mobile and base network elements.

**16.** Method according to one of the preceding claims, whereby IP is employed as a protocol for communication between mobile and base network elements.

**17.** Method according to one of the preceding claims, whereby a mobile station is employed as the at least one mobile network element and a base station is employed as the at least one base network element in a data communications network.

**18.** Network comprising at least one base network element and and least one mobile network element (ms1, ms2) affiliated with the base network element, whereby each network element comprises

- electronic means for measuring transmission channel SINR of a transmission channel that carries data between the network elements,
- electronic means for estimating the channel's SINR by altering a term of the SINR,
- means for comparing different estimated channel SINR values.

**19.** Network according to claim 18, wherein the a plurality of mobile network elements are affiliated with a lesser number of base network elements.

**20.** Network according to one of the claims 18 or 19, wherein the at least one mobile network element is a mobile station comprising at least one of the following: a mobile network user equipment, a cellular phone, a Laptop computer with means for accessing a communications network.

**21.** Network according to one of the claims 18 to 20, wherein the at least one base network element is a base station.

**22.** Network according to one of the claims 18 to 21, wherein the at least one base network element and the at least one mobile network element each comprise a plurality of antennas.

**23.** Network according to one of the claims 18 to 22, wherein the at least one mobile network elements operates within multiple bandwidths.

**24.** Use of a network according to one of claims 18 to 23 for carrying out a method according to claims 1 to 17.

FIG 1

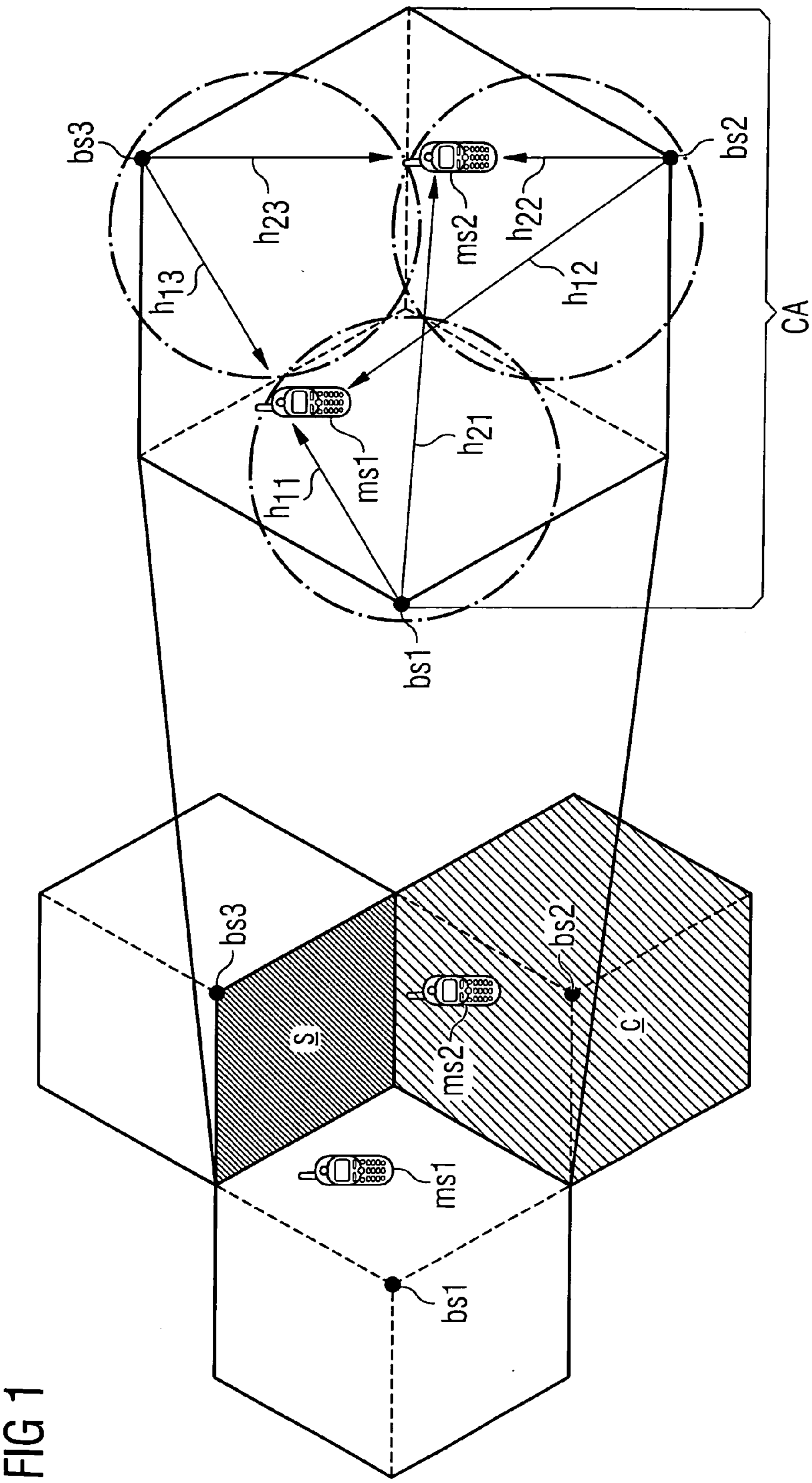

FIG 2

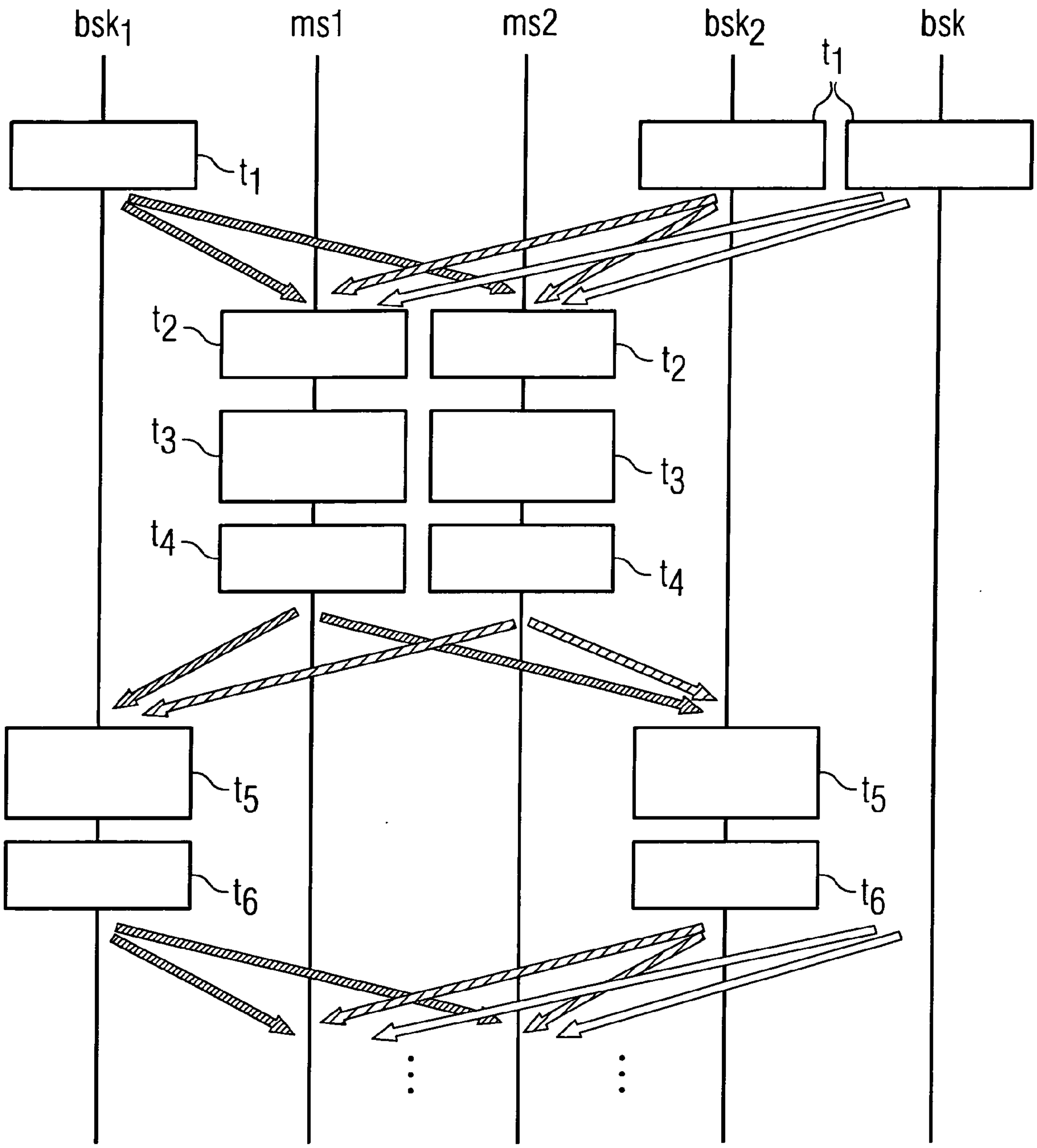

FIG 3

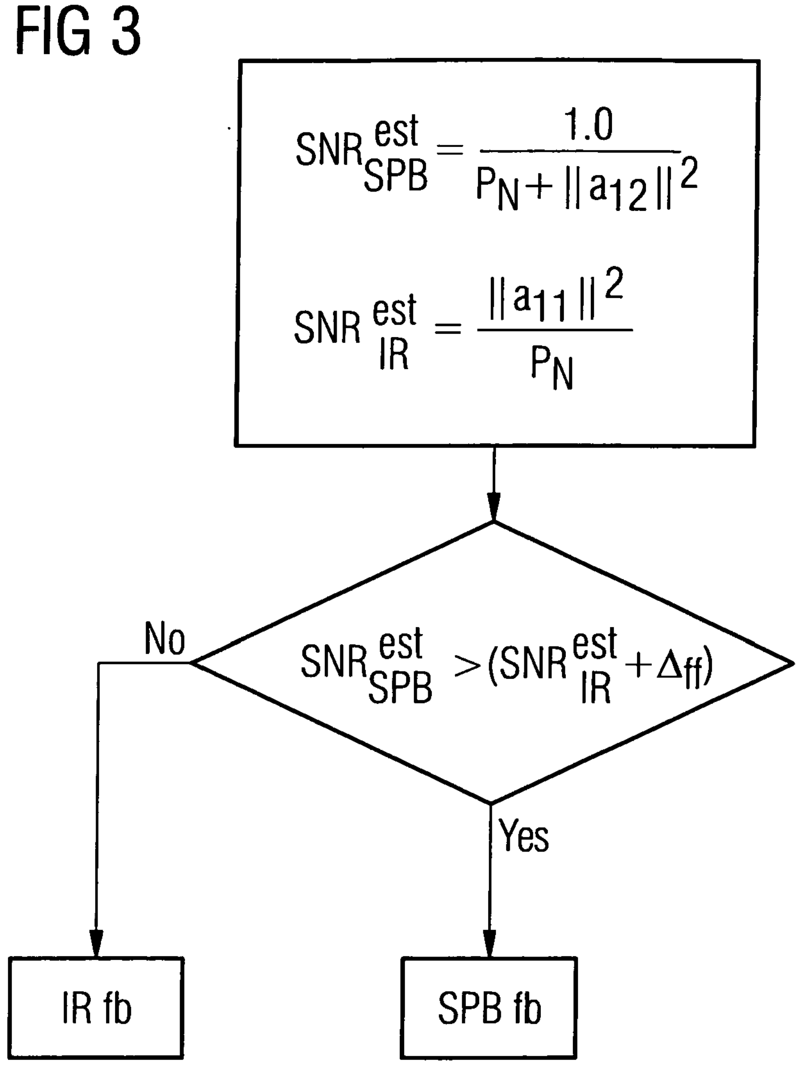
$SNR_{SPB}^{est} = \frac{1.0}{P_N + \|a_{12}\|^2}$
$SNR_{IR}^{est} = \frac{\|a_{11}\|^2}{P_N}$
No
$SNR_{SPB}^{est} > (SNR_{IR}^{est} + \Delta_{ff})$
Yes
IR fb
SPB fb

FIG 4

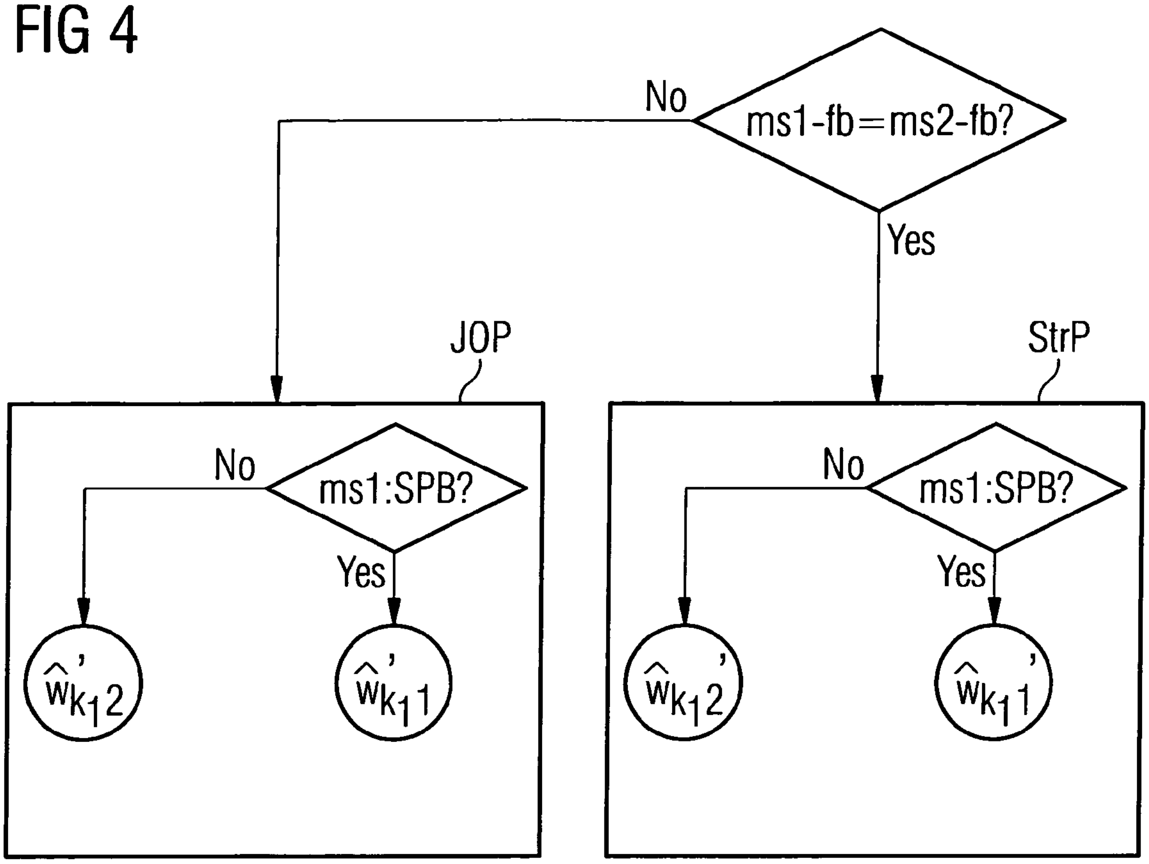
ms1-fb=ms2-fb?
No
Yes
JOP
StrP
ms1:SPB?
No
Yes
ms1:SPB?
No
Yes
$\hat{w}'_{k_1 2}$
$\hat{w}'_{k_1 1}$
$\hat{w}'_{k_1 2}$
$\hat{w}'_{k_1 1}$

FIG 5

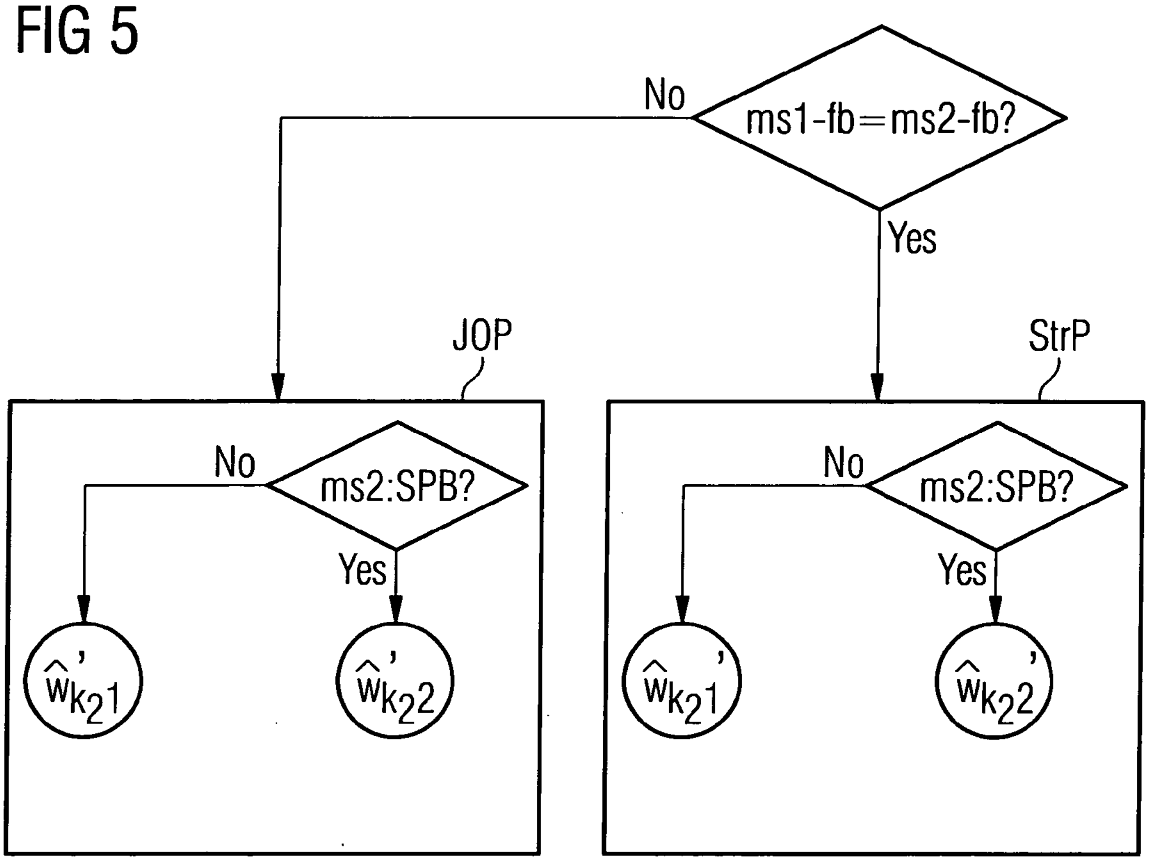

FIG 6

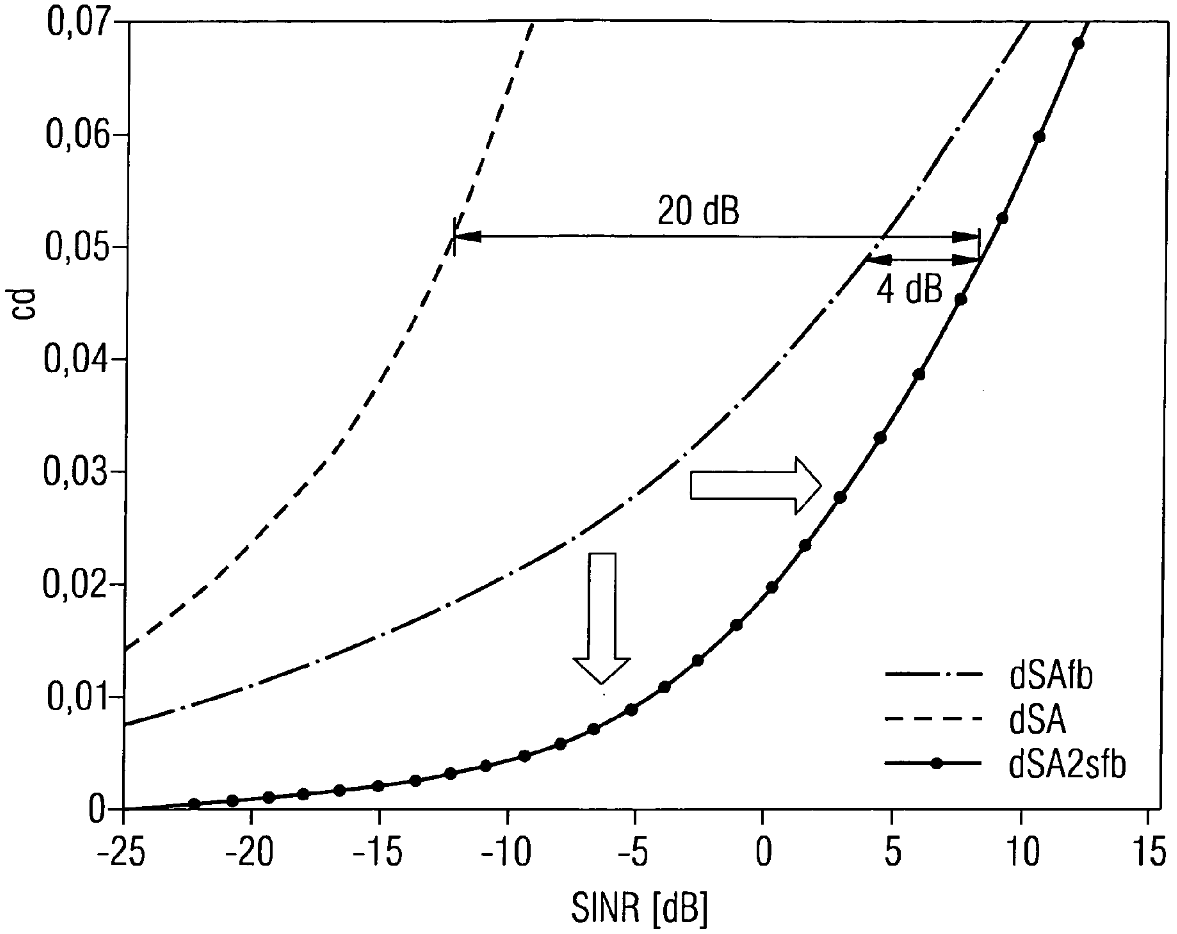
0,07
0,06
0,05
0,04
0,03
0,02
0,01
0
cd
-25
-20
-15
-10
-5
0
5
10
15
SINR [dB]
20 dB
4 dB
dSAfb
dSA
dSA2sfb

European Patent Office

# EUROPEAN SEARCH REPORT

Application Number
EP 07 00 7032

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 02/087106 A (NOKIA CORP [FI]; KYOESTI PEKKA [FI]) 31 October 2002 (2002-10-31)<br>* abstract *<br>* page 7, line 21 - page 10, line 27 *<br>----- | 1-24 | INV.<br>H04B17/00 |
| A | EP 1 521 386 A (SAMSUNG ELECTRONICS CO LTD [KR]) 6 April 2005 (2005-04-06)<br>* abstract *<br>* claims 1-4 *<br>----- | 1-24 | |
| A | WO 2005/099163 A (KONINKL PHILIPS ELECTRONICS NV [NL]; MONTALBANO GIUSEPPE [FR]) 20 October 2005 (2005-10-20)<br>* abstract *<br>* page 4 *<br>* claims 1-8 *<br>----- | 1-24 | |

TECHNICAL FIELDS SEARCHED (IPC)

H04B
H04L

The present search report has been drawn up for all claims

| Place of search | Date of completion of the search | Examiner |
|---|---|---|
| Munich | 9 August 2007 | Mier, Ana |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

**ANNEX TO THE EUROPEAN SEARCH REPORT ON EUROPEAN PATENT APPLICATION NO.** EP 07 00 7032

This annex lists the patent family members relating to the patent documents cited in the above-mentioned European search report.
The members are as contained in the European Patent Office EDP file on
The European Patent Office is in no way liable for these particulars which are merely given for the purpose of information.

09-08-2007

| Patent document cited in search report | Publication date | Patent family member(s) | Publication date |
|---|---|---|---|
| WO 02087106 A | 31-10-2002 | AT 297613 T | 15-06-2005 |
| | | CN 1643807 A | 20-07-2005 |
| | | DE 60111427 D1 | 14-07-2005 |
| | | DE 60111427 T2 | 23-03-2006 |
| | | EP 1386417 A1 | 04-02-2004 |
| | | ES 2240459 T3 | 16-10-2005 |
| | | US 2004131108 A1 | 08-07-2004 |
| EP 1521386 A | 06-04-2005 | AU 2004306027 A1 | 07-04-2005 |
| | | CA 2537613 A1 | 07-04-2005 |
| | | CN 1860702 A | 08-11-2006 |
| | | JP 2007507969 T | 29-03-2007 |
| | | WO 2005032001 A1 | 07-04-2005 |
| | | KR 20050031841 A | 06-04-2005 |
| | | US 2005068909 A1 | 31-03-2005 |
| WO 2005099163 A | 20-10-2005 | CN 1943158 A | 04-04-2007 |
| | | KR 20060135027 A | 28-12-2006 |

EPO FORM P0459

For more details about this annex : see Official Journal of the European Patent Office, No. 12/82